# EUROPÄISCHE PATENTSCHRIFT

(11) **EP 0 897 670 B1**
(45) Veröffentlichungstag und Bekanntmachung des Hinweises auf die Patenterteilung: **19.05.2004**
(21) Anmeldenummer: 98119168.7
(22) Anmeldetag: 16.11.1995
(51) Int. Cl.: A23C 13/10, A23C 13/12

(54) **Milchprodukt**
Milk product
Produit laitier

(30) Priorität: 12.01.1995 AT 795; 01.06.1995 AT 29595
(43) Veröffentlichungstag der Anmeldung: 24.02.1999
(62) Teilanmeldung aus: 95936373.0
(73) Patentinhaber: HAMA Foodservice GesmbH, 5322 Hof bei Salzburg (AT)
(72) Erfinder: Mandl, Hans, 6542 Pfunds (AT); Haindl, Rudolf F., 5303 Thalgau (AT)
(74) Vertreter: Torggler, Paul Norbert, Dr.

(56) Entgegenhaltungen:
- EP-A- 0 399 580
- WO-A-93/19611
- DE-A- 2 300 663
- DE-A- 3 324 821
- FR-A- 2 005 794
- US-A- 1 605 009

## Beschreibung

Die Erfindung betrifft ein Milchprodukt mit schnittfähiger Konsistenz, welches insgesamt im wesentlichen, vorzugsweise ausschließlich, nur aus Rahm und Gelatine besteht.

Auf dem Markt sind bereits die verschiedensten, in Verpackungen abgepackte Milchprodukte erhältlich. So wird beispielsweise in der US 1,605,009 A1 ein Milchprodukt offenbart, das durch Fermentation von Süßrahm und anschließendem Mischen mit Milch, in der Gelatine aufgelöst wurde, hergestellt wird. Das Endprodukt enthält ca. 25 % Fett und ca. 1 % Gelatine und ist streichfähig. Weiters ist aus der DE 33 24 821 A1 ein streichfähiges Sauermilcherzeugnis bekannt, dessen Fettgehalt bei etwa 30 Prozent liegt.

Die Herstellung von schnittfähigen Mehrprodukten mit hohem Fettgehalt unter Verwendung von Gelatine war bereits bekannt. So wird beispielsweise in der WO 93/19611 A ein Milchfett mit einem Fettanteil zwischen 25 und 60 % angegeben. Aus der EP 0 399 580 A ist weiters ein butterähnliches Produkt bekannt, das im Wesentlichen aus Rahm und Butterfett besteht und somit einen hohen Fettanteil aufweist.

Aufgabe der Erfindung ist es, ein neuartiges Milchprodukt bereitzustellen, welches möglichst ungekühlt haltbar sein soll und sich durch zahlreiche, sowohl gewerbliche wie private Anwendungsmöglichkeiten auszeichnet.

Erfindungsgemäß gelingt dies durch ein Milchprodukt mit den Merkmalen des Anspruches 1.

Als besonders günstig für die Konsistenz und Haltbarkeit des neuartigen Milchproduktes hat sich herausgestellt, wenn es einen Gehalt von höchstens 3 % Gelatine, vorzugsweise zwischen 1 % und 1,5 % Gelatine, aufweist.

Das neuartige Milchprodukt läßt sich ohne weitere aufwendige Zutaten so herstellen und verpacken, dass es über Monate ungekühlt haltbar ist. Das so verpackte Milchprodukt findet vor allem in der gewerblichen Küche als Halbfertigprodukt zahlreiche Anwendungsmöglichkeiten. Man kann das schnittfähige Milchprodukt beispielsweise durch Herausstürzen aus der Verpackung aus dieser entnehmen. Man kann dann dieses Produkt in diesem halbfesten Zustand beispielsweise Torten, Aufstrichen, Cremen, Soßen oder Eis beifügen. Es ist grundsätzlich auch pur eßbar. Weiters besteht die Möglichkeit, das erfindungsgemäße Milchprodukt durch Erwärmen zu verflüssigen, anschließend zu verarbeiten, wobei bei einer darauffolgenden Abkühlung wieder eine Verfestigung eintritt. Es bildet somit ein geschmacksneutrales Halbfertigprodukt für die gewerbliche Küche.

Als Rahm eignet sich insbesondere Rahm mit einem Fettanteil von etwa 15 %. Dieser Fettanteil liegt günstigerweise niedriger als der von üblichem Rahm mit 36 %.

Zur Erzielung einer langen Lagerzeit können an sich bekannte Verpackungen und besondere Herstellungsverfahren herangezogen werden.

Was die Verpackungen betrifft, können diese beispielsweise - wie an sich bekannt - aus Karton und/oder Papier bestehen, der mit Aluminium und/oder Kunststoff (vorzugsweise Polyethylen) ausgekleidet ist. Vor dem Abfüllen können die Verpackungen beispielsweise mittels Wasserstoffperoxid und anschließender Trocknung über 200°C entkeimt werden, um insgesamt eine aseptische Abfüllung zu ermöglichen.

Das Grundkonzept des erfindungsgemäßen Verfahrens zur Herstellung des neuartigen Milchproduktes liegt darin, Rahm und Gelatine zu mischen und anschließend in Verpackungen abzufüllen.

Um eine gute Haltbarkeit zu erzielen, können mehrere Behandlungsstufen vorgesehen werden: zunächst ist es günstig, den aus frischer Vollmilch hergestellten Rahm zu pasteurisieren, vorzugsweise bei einer Temperatur von 98°C.

Um eine innige Vermischung mit der Gelatine zu erzielen, kann diese Vermischung in einem Mischtank bei erhöhter Temperatur über 30°C, vorzugsweise bei etwa 40°C erfolgen. Danach ist es günstig, wenn man die zumindest Rahm und Gelatine enthaltende Mischung mindestens 1/2 Stunde quellen läßt.

Für die lange ungekühlte Haltbarkeit ist es besonders günstig, die Mischung vor dem Abfüllen in die Verpackungen ultrahoch zu erhitzen, auf eine Temperatur von über 130°C, vorzugsweise auf 138°C.

Um eine gleichmäßige Größe der Fetteilchen zu erhalten, ist bevorzugt vorgesehen, die Mischung bei erhöhter Temperatur mit hohem Druck zu homogenisieren.

In der Folge wird ein Beispiel beschrieben:

Aus frischer Vollmilch hergestellter Rahm mit 15 % Fett wird pasteurisiert, bei 98°C (Peroxydase negativ). Anschließend kann eine Kühlung auf 4°C erfolgen. Zur eigentlichen Mischung des Rahms mit der Gelatine kann der Rahm in einem Mischtank auf 40°C angewärmt werden und dann mit einem Turbomischer, beispielsweise 1,2 % hochplombige Gelatine eingerührt werden (alle Prozentangaben sind als Gewichtsprozentangaben zu verstehen). Danach läßt man die Mischung eine Stunde lang quellen, worauf eine Abkühlung auf 30°C erfolgt. Vor der Abfüllung in die Verpackungen erfolgt zur Erzielung einer großen Haltbarkeit eine Ultrahochtemperaturerhitzung (UHT) auf ca. 138°C. Darauf kann noch eine Homogenisierung bei 60°C und 180bar Druck erfolgen. Nach einer Abkühlung auf ca. 25° kann dann die aseptische Abfüllung erfolgen. Darauf können acht Tage Quarantäne mit mikrobiologischer Kontrolle erfolgen.

Das so hergestellte neuartige Milchprodukt weist eine Mindesthaltbarkeit von 5 Monaten bei einer Lagerung bei Zimmertemperatur auf. Es eignet sich insbesondere als Halbfertigprodukt für die gewerbliche Küche, kann aber auch im privaten Bereich insbesondere als Fertigprodukt eingesetzt werden.

Wenngleich der bevorzugte Fettgehalt des Milchproduktes unter 25 % liegt, so können für spezielle Anwendungen, beispielsweise Soßen, auch Milchprodukte mit höherem Fettgehalt verwendet werden, beispielsweise solche, die aus Sauerrahm oder Süßrahm mit 44 % Fett (Double-Rahm) bestehen.

## Patentansprüche

1. Milchprodukt mit schnittfähiger Konsistenz und einem Fettanteil von mindestens 5 %, welches insgesamt im wesentlichen, vorzugsweise ausschließlich, nur aus Rahm und Gelatine besteht, **dadurch gekennzeichnet, daß** das Milchprodukt einen Fettanteil zwischen 10 % und 20 % und einen Gehalt von 0,5 % bis 5 % an Gelatine aufweist.

2. Milchprodukt nach Anspruch 1, **dadurch gekennzeichnet, daß** der Fettanteil bei etwa 15 % liegt.

3. Milchprodukt nach Anspruch 1 oder 2, **dadurch gekennzeichnet, daß** es ein in einer Verpackung abgepacktes Produkt ist.

4. Milchprodukt nach einem der Ansprüche 1 bis 3, **dadurch gekennzeichnet, daß** es frei von Aufschlaghilfen und unaufschlagbar ist.

5. Milchprodukt nach einem der Ansprüche 1 bis 4, **dadurch gekennzeichnet, daß** es einen Gehalt von höchsten 3 % Gelatine aufweist.

6. Milchprodukt nach einem der Ansprüche 1 bis 5, **dadurch gekennzeichnet, daß** es einen Gehalt zwischen 1 % und 1,5 % Gelatine aufweist.

7. Milchprodukt nach einem der Ansprüche 1 bis 6, **gekennzeichnet durch** eine Lagerfähigkeit bei Zimmertemperatur von mindestens drei Monaten, vorzugsweise mindestens fünf Monaten.

8. Verwendung des Milchproduktes nach einem der Ansprüche 1 bis 7 als Halbfertigprodukt.

9. Verfahren zur Herstellung eines Milchproduktes nach einem der Ansprüche 1 bis 8, **dadurch gekennzeichnet, daß** Rahm, vorzugsweise pasteurisierter Rahm, bei einer über 30°C liegenden, vorzugsweise bei 40°C liegenden Temperatur in einem Mischtank mit Gelatine vermischt wird, wobei man die Rahm und Gelatine enthaltende Mischung nach dem Mischvorgang mindestens eine halbe Stunde bei erhöhter Temperatur, vorzugsweise von etwa 40°C, quellen läßt.

10. Verfahren nach Anspruch 9, **dadurch gekennzeichnet, daß** die Rahm und Gelatine enthaltende Mischung vor dem Abfüllen in die Verpackungen auf über 130°C, vorzugsweise auf 138°C, erhitzt wird.

## Claims

1. A dairy product of cuttable consistency having an animal fat proportion of at least 5%, wherein the dairy product on the whole consists essentially of cream and gelatine, preferably of cream and gelatine only, **characterised in that** the dairy product contains a fat proportion of between 10% and 20% and a content of between 0,5% and 5% gelatine.

2. A dairy product as set forth in claim 1, **characterised in that** the fat proportion of the milk product is about 15%.

3. A dairy product as set forth in claim 1 or 2, **characterised in that** the dairy product is packaged in a pack.

4. A dairy product as set forth in one of claims 1 to 3, **characterised in that** it is free from whipping aids and is unwhippable.

5. A dairy product as set forth in one of claims 1 to 4, **characterised in that** the milk product contains cream, preferably at least 60% cream.

6. A dairy product as set forth in one of claims 1 to 5, **characterised by** a content of between 1% and 1,5% gelatine.

7. A dairy product as set forth in one of claims 1 to 6, **characterised by** a storage capability at room temperature of at least three months, preferably at least five months.

8. Use of a dairy product as set forth in one of claims 1 to 7 as a semi-finished product.

9. A process for the production of a dairy product as set forth in one of claims 1 to 8, **characterised in that** cream, preferably a pasteurised cream, is mixed at a temperature which is above 30°C, preferably at 40°C, in a mixing tank, with the gelatine, wherein after the mixing operation the mixture containing at least cream and gelatine is left to swell for at least half an hour at elevated temperature, preferably of about 40°C.

10. A process as set forth in claim 9, **characterised in that** before being introduced into the packs, the mixture containing at least cream and gelatine is heated to over 130°C, preferably to 138°C.

## Revendications

1. Produit laitier à consistance apte à la coupe et une teneur en matière grasse d'au moins 5 %, lequel est constitué dans l'ensemble pour l'essentiel, de préférence exclusivement, de crème et de gélatine, **caractérisé en ce que** le produit laitier présente une teneur en matière grasse entre 10 % et 20 % et une teneur en gélatine de 0,5 % à 5 %.

2. Produit laitier selon la revendication 1, **caractérisé en ce que** la teneur en matière grasse est d'environ 15 %.

3. Produit laitier selon la revendication 1 ou 2, **caractérisé en ce qu'**il s'agit d'un produit conditionné dans un emballage.

4. Produit laitier selon l'une quelconque des revendications 1 à 3, **caractérisé en ce qu'**il ne contient pas d'émulsifiant et ne peut être émulsionné.

5. Produit laitier selon l'une quelconque des revendications 1 à 4, **caractérisé en ce qu'**il présente une teneur en gélatine de 3 % au maximum.

6. Produit laitier selon l'une quelconque des revendications 1 à 5, **caractérisé en ce qu'**il présente une teneur en gélatine entre 1 % et 1,5 %.

7. Produit laitier selon l'une quelconque des revendications 1 à 6, **caractérisé par** une aptitude au stockage à température ambiante à au moins trois mois, de préférence à au moins cinq mois.

8. Utilisation du produit laitier selon l'une quelconque des revendications 1 à 7, en tant que produit semi-fini.

9. Procédé de fabrication d'un produit laitier selon l'une quelconque des revendications 1 à 8, **caractérisé en ce que**, à une température supérieure à 30°C, de préférence 40°C, la crème, de préférence la crème pasteurisée, est mélangée à la gélatine dans une cuve de mélange, après le processus de mélange, on laisse gonfler le mélange contenant la crème et la gélatine pendant au moins une demi-heure à température plus élevée, de préférence à 40°C environ.

10. Procédé selon la revendication 9, **caractérisé en ce que** le mélange contenant la crème et la gélatine est chauffé au-dessus de 130°C, de préférence à 138°C, avant le conditionnement dans les emballages.
